Europäisches Patentamt

European Patent Office

Office européen des brevets

(11) Veröffentlichungsnummer: **0 392 275**

**A1**

(12) **EUROPÄISCHE PATENTANMELDUNG**

(21) Anmeldenummer: **90106033.5**

(22) Anmeldetag: **29.03.90**

(51) Int. Cl.5: **B65G 43/02, B23Q 11/00**

(30) Priorität: **13.04.89 DE 3912187**

(43) Veröffentlichungstag der Anmeldung:
**17.10.90 Patentblatt 90/42**

(84) Benannte Vertragsstaaten:
**DE ES IT**

(71) Anmelder: **Gebr. Hennig GmbH**
**Dorfstrasse 41**
**D-8045 Ismaning(DE)**

(72) Erfinder: **Stöhr, Albert**
**Am Wiegenberg 8**
**D-8015 Markt Schwaben(DE)**
Erfinder: **Rehle, Alfred**
**Pfeuferstr. 33**
**D-8000 München 70(DE)**

(74) Vertreter: **Tetzner, Volkmar, Dr.-Ing. Dr. jur.**
**Van-Gogh-Strasse 3**
**D-8000 München 71(DE)**

(54) **Späneförderer.**

(57) Die Erfindung betrifft einen Späneförderer, bei dem zum Überlastungsschutz des Antriebsaggregates eine Drehmomentstütze, ein hierdurch betätigbarer Steuerschalter (22), ein Wendeschütz und ein Zeitrelais vorgesehen sind, so daß bei einer Störung das Förderorgan kurzzeitig auf Rückwärtslauf geschaltet wird.

FIG. 1

EP 0 392 275 A1

# Späneförderer

Die Erfindung betrifft einen Späneförderer entsprechend dem Oberbegriff des Anspruches 1.

Bei Späneförderern (insbesondere Band- oder Kratzerförderern) treten im Betrieb gelegentlich Störungen durch einen Spänestau auf. Da hierbei das Förderorgan (Scharnierband oder Kratzerkette) mehr oder weniger blockiert ist, besteht die Gefahr einer Überlastung des Antriebsaggregates.

Um das Antriebsaggregatbei einer Blockierung des Förderorganes gegen Überlastung zu schützen, sind bekannte Späneförderer mit einer Rutschkupplung ausgerüstet. Eine derartige Ausführung ist jedoch mit verschiedenen Nachteilen behaftet. Aufgrund des Verschleißes des Kupplungsscheiben der Rutschkupplung verändert sich das vom Antriebsaggregat an das Förderorgan übertragene Drehmoment. Dies beeinträchtigt nicht nur die Funktionssicherheit des Späneförderers, sondern macht bei automatisierten Fertigungseinrichtungen unerwünschte Nachjustierungen erforderlich.

Der Erfindung liegt daher die Aufgabe zugrunde, einen Späneförderer der im Oberbegriff des Anspruches 1 vorausgesetzten Art so auszubilden, daß mit einfachen und weitgehend wartungsfrei arbeitenden Mitteln ein zuverlässiger Überlastungsschutz des Antriebsaggregats erreicht wird.

Diese Aufgabe wird erfindungsgemäß durch die kennzeichnenden Merkmale des Anspruches 1 gelöst. Zweckmäßige Ausgestaltungen der Erfindungen sind Gegenstand der Unteransprüche.

Bei dem erfindungsgemäßen Späneförderer ist ein Wendeschütz vorgesehen, das bei einer bestimmten Belastung des Antriebsaggregats (gemessen durch die Auslenkung einer Drehmomentstütze) anspricht und die Drehrichtung des Antriebsaggregats auf Rückwärtslauf des Förderorganes umschaltet. Weiterhin ist ein Zeitrelais vorgesehen, das eine einstellbare Zeit nach dem Ansprechen des Wendeschützes die Drehrichtung des Antriebsaggregats erneut auf Vorwärtslauf des Förderorganes umschaltet.

Die geschilderte kurzzeitige Umkehrung der Laufrichtung des Förderorganes kann erforderlichenfalls mehrfach vorgenommen werden, bis sich schließlich der den Überlastungsschutz auslösende Spänestau aufgelöst hat. Ein manueller Eingriff in den Betriebsablauf ist somit bei Spänestau und sonstigen Verklemmungen nicht erforderlich.

Da die geschilderte Einrichtung einen zuverlässigen Überlastungsschutz des Antriebsaggregats gewährleistet, kann bei dem erfindungsgemäßen Späneförderer auf den Einbau einer Rutschkupplung zwischen dem Antriebsaggregat und dem Förderorgan verzichtet werden. Damit ist über eine lange, wartungsfreie Betriebszeit gewährleistet, daß das einmal eingestellte Nenndrehmoment vom Antriebsaggregat auf das Förderorgan übertragen wird.

Ein Ausführungsbeispiel der Erfindung ist in der Zeichnung veranschaulicht. Es zeigen

Fig. 1 eine Seitenansicht der mechanischen Elemente der Überlastungsschutzeinrichtung,

Fig. 2 und 3 Schnitte längs der Linie II-II bzw. III-III der Fig. 1,

Fig. 4 ein Schaltbild der zur Überlastungsschutzeinrichtung gehörenden elektrischen Schaltung.

Der Antrieb des im einzelnen nicht veranschaulichten Späneförderers erfolgt durch einen (nicht dargestellten) Motor, ein Antriebsaggregat 1, eine als Hohlwelle ausgebildete Antriebswelle 2 und ein mit der Antriebswelle 2 verbundenes Kettenrad 3, über das das endlos umlaufende, als Scharnierband oder Kratzerkette ausgebildete Förderorgan angetrieben wird. Die Verbindung zwischen der Welle 1a des Antriebsaggregates 1 und der Antriebswelle 2 erfolgt über einen Wellenstummel 4, der über eine Paßfeder 5 mit der Welle 1a und über eine form- oder kraftschlüssige Verbindung, z. B. einen Abscherstift 6 mit der Antriebswelle 2 verbunden ist.

Die Antriebswelle ist mittels eines Lagers 7 in einem Lagerschild 8 gelagert, das z. B. mittels Muttern 9 auf Bolzen 10 befestigt ist, die ihrerseits mit einem Seitenschild 11 des Gehäuses der Späneförderers fest verbunden sind.

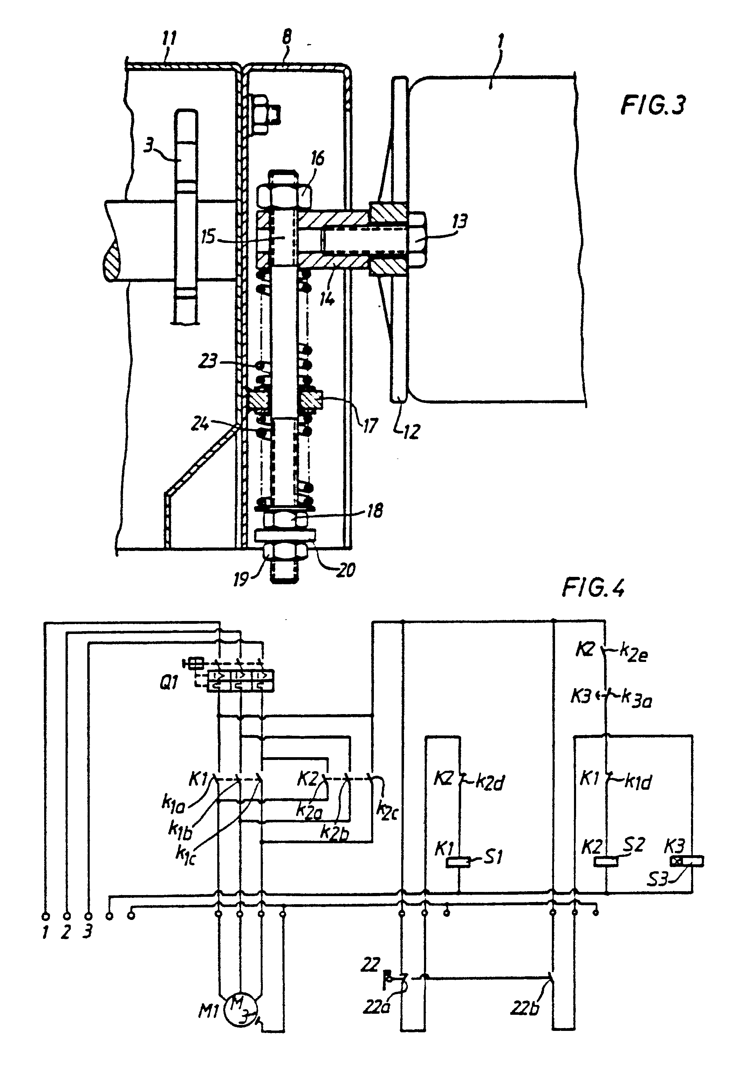

Mit dem Gehäuse des Antriebsaggregates 1 ist eine Schwinge 12 drehfest verbunden. An der Schwinge 12 ist mittels einer Schraube 13 eine Gewindehülse 14 befestigt, in deren axiales Innengewinde die Schraube 13 eingeschraubt ist. Am linken Ende (Fig. 3) der Gewindehülse 14 ist eine um 90° gegenüber der Hülsenachse versetzte Gewindebohrung vorgesehen, in die eine Gewindestange 15 eingeschraubt ist. Die Sicherung der Verbindung zwischen Gewindehülse 14 und der Gewindestange 15 kann durch eine Kontermutter 16 oder einen Sicherungssplint erfolgen.

Die Gewindestange 15 ist beweglich durch ein ortsfestes Widerlager 17 hindurchgeführt, das am Lagerschild 8 befestigt ist.

Am unteren Ende trägt die Gewindestange 15 einen mittels Muttern 18, 19 befestigten L-förmigen Bügel 20, an dem ein Steuernocken 21 zur Betätigung eines Steuerschalters 22 vorgesehen ist.

Zwischen dem ortsfesten Widerlager 17 und der Gewindehülse 14 ist auf der Gewindestange 15 ein Federelement, beispielsweise eine Druckfeder 23, vorgesehen. Ein weiteres, beispielsweise als Druckfeder 24 ausgebildetes Federelement befindet sich zwischen dem Widerlager 17 und der Mutter 18.

Die bisher beschriebenen mechanischen Teile der Einrichtung zum Überlastungsschutz des Antriebsaggregates funktionieren wie folgt:

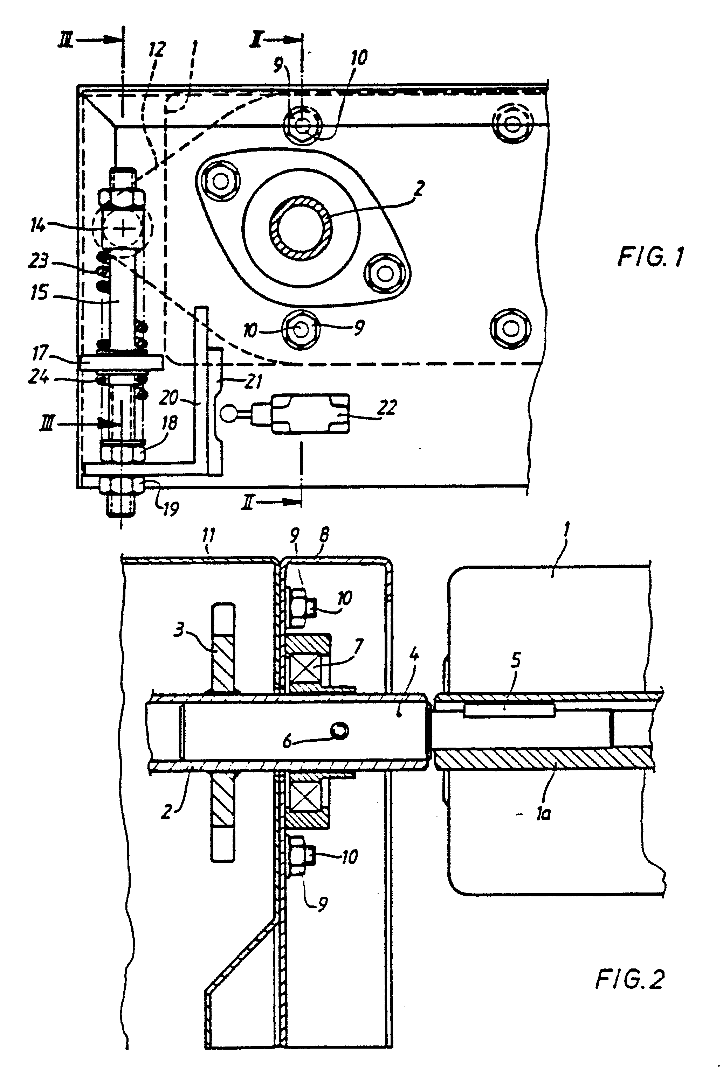

Es sei angenommen, daß das Förderorgan des Späneförderers als Scharnierband ausgebildet ist. Wird das Förderorgan durch eine Störung, beispielsweise einen Spänestau blockiert, so wird die Schwinge 12 der Drehmomentstütze im Gegenuhrzeigersinn (Fig. 1) ausgelenkt. Die obere Druckfeder 23 wird infolgedessen zusammengedrückt. Die Gewindestange 15, der Bügel 20 und der Steuernocken 21 bewegen sich in Auslenkrichtung (in Fig. 1 somit nach unten). Bei einer bestimmten Auslenkung der Drehmomentstütze wird der Steuerschalter 22 durch den Steuernocken 21 betätigt. Die sich an diese Betätigung des Steuerschalters 22 anschließenden Schaltvorgänge werden anhand von Fig. 4 noch erläutert.

Während ein Scharnierbandförderer grundsätzlich auf dem Obertrum des endlos umlaufenden Förderorganes fördert, erfolgt der Spänetransport bei Kratzerförderern meist mit dem Untertrum des als Kratzerkette ausgebildeten Förderorganes. Die Drehrichtung des Antriebsaggregats ist somit im Normalbetrieb eines Kratzerförderers im allgemeinen umgekehrt zur Drehrichtung eines Scharnierbandförderers.

Ist nun das Förderorgan des Späneförderers als Kratzerkette ausgebildet und tritt im Betrieb eine Störung, beispielsweise ein Spänestau, auf, so wird die Schwinge 12 der Drehmomentstütze im Uhrzeigersinn (Fig. 1) ausgelenkt. Hierbei wird die untere Druckfeder 24 stärker zusammengedrückt, wobei sich die Gewindestange 15, der Bügel 20 und der Steuernocken 21 nach oben bewegen. Bei einer bestimmten Auslenkung der Drehmomentstütze wird der Steuerschalter 22 betätigt.

Anhand von Fig. 4 seien nun die elektrischen Elemente der Überlastungsschutzeinrichtung sowie die bei einer Betätigung des Steuerschalters 22 auftretenden Schaltvorgänge näher erläutert.

Die Schaltung gemäß Fig. 4 zeigt den Antriebsmotor M1, einen Motorschutzschalter Q1, ein Schütz K1 (mit Kontakten $k_{1a}$, $k_{1b}$, $k_{1c}$, $k_{1d}$ sowie mit einer Relaisspule S1), ferner eine Wendeschütz $K''$ (mit Kontakten $k_{2a}$, $k_{2b}$, $k_{2c}$, $k_{2d}$, $k_{2e}$ sowie mit einer Relaisspule S2), weiterhin ein Zeitrelais K3 (mit einem Kontakt $k_{3a}$ sowie einer Relaisspule S3), ferner den bereits anhand von Fig.1 erwähnten Steuerschalter 22 (mit den Kontakten 22a, 22b).

Die Funktion der Schalter gemäß Fig.4 ist wie folgt: Wird an die Klemmen 1, 2 und 3 von der Hauptsteuerung Spannung gelegt, so fließt Strom über den geschlossenen Motorschutzschalter Q1 und die geschlossenen Kontakte 22a und $k_{2d}$ zur Relaisspule S1, so daß das Schütz K1 anzieht. Über die damit geschlossenen Kontakte $k_{1a}$, $k_{1b}$, $k_{1c}$ erhält der Motor M1 Spannung, so daß der Späneförderer anläuft.

Tritt nun ein Spänestau auf und wird der Steuerschalter 22 betätigt, so öffnet der Kontakt 22a und der Kontakt 22b schließt. Infolgedessen wird die Relaisspule S1 entregt, so daß die Kontakte $k_{1a}$, $k_{1b}$, $k_{1c}$ öffnen. Gleichzeitig erhält die Relaisspule S2 über die geschlossenen Kontakte 22b, $k_{1d}$ Spannung, so daß das Schütz K2 anzieht und die Kontakte $k_{2a}$, $k_{2b}$, $k_{2c}$ schließen. Der Antriebsmotor M1 läuft infolgedessen rückwärts.

Über den Kontakt $k_{2e}$ geht das Schütz K2 in Selbsthaltung. Der Antriebsmotor M1 läuft daher auch dann weiter rückwärts, wenn der Steuerschalter 22 nicht mehr betätigt ist (so daß der Kontakt 22b wieder geöffnet ist).

Gleichzeitig mit dem Ansprechen des Schützes K2 erhält auch die Relaisspule S3 des anzugverzögerten Zeitrelais K3 Spannung. Ist die eingestellte Zeit erreicht, zieht das Zeitrelais K3 an, so daß der Kontakt $k_{3a}$ öffnet. Damit wird die Relaisspule S2 des Wendeschützes K2 entregt.

Ist das Wendeschütz K2 entregt und der Steuerschalter 22 nicht mehr betätigt, so zieht erneut das Schütz K1 an, so daß der Motor wieder in Förderrichtung läuft.

Hat sich der Spänestau durch diese kurzzeitige Umkehrung der Förderrichtung noch nicht aufgelöst, so kann sich der geschilderte Ablauf beliebig oft wiederholen. Der Motor ist hierbei durch den Motorschutzschalter Q1 hinreichend geschützt.

---

## Ansprüche

1. Späneförderer, enthaltend
a) ein als Scharnierband oder als Kratzerkette ausgebildetes, endlos umlaufendes Förderorgan,
b) ein mit dem Förderorgan verbundenes Antriebsaggregat,
c) eine Einrichtung zum Überlastungsschutz des Antriebsaggregates,
gekennzeichnet durch folgende Elemente der Einrichtung zum Überlastungsschutz:
$c_1$) eine mit dem Antriebsaggregat verbundene Drehmomentstütze,
$c_2$) einen durch eine bestimmte Auslenkung der Drehmomentstütze betätigbaren Steuerschalter (22),
$c_3$) ein bei Betätigung des Steuerschalters (22) ansprechendes und die Drehrichtung des Antriebsaggregates auf Rückwärtslauf des Förderorganes umschaltendes Wendeschütz (K2),
$c_4$) ein Zeitrelais (K3), das eine einstellbare Zeit nach dem Ansprechen des Wendeschützes (K2) die Drehrichtung des Antriebsaggregates erneut auf Vorwärtslauf des Förderorganes umschaltet.

2. Späneförderer nach Anspruch 1, gekennzeichnet durch folgende Teile der Drehmomentstütze:

$c_{11}$) eine mit dem Gehäuse des Antriebsaggregates drehfest verbundene Schwinge (12),

$c_{12}$) eine Gewindestange (15), die an ihrem einen Ende über eine Gewindehülse (14) mit der Schwinge (12) verbunden ist,

$c_{13}$) einen mit dem anderen Ende der Gewindestange verbundenen Steuernocken (21) zur Betätigung des als Stößelrollenschalter ausgebildeten Steuerschalters (22),

$c_{14}$) ein ortsfestes Widerlager (17), durch das die Gewindestange (15) beweglich hindurchgeführt ist,

$c_{15}$) zwei auf der Gewindestange (15) angeordnete, vorgespannte Druckfedern (23, 24), die zwischen dem Widerlager (17) und den beiden Enden der Gewindestange eingespannt sind und bei einer Bewegung der Schwinge (12) gegensinnig beansprucht werden.

3. Späneförderer nach Anspruch 1, dadurch gekennzeichnet, daß das Antriebsaggregat ein Schneckengetriebe (1) enthält, das über einen Wellenstummel (4) mit einer als Hohlwelle ausgebildeten Antriebswelle (2) des Förderorganes verbunden ist.

4. Späneförderer nach den Ansprüchen 2 und 3, dadurch gekennzeichnet, daß die Druckfedern (23, 24), die Gewindestange (15) und das ortsfeste Widerlager (17) der Drehmomentstütze in einem seitlich an das Gehäuse (11) des Späneförderers angesetzten Lagerschild (8) angeordnet sind, das zugleich das Lager (7) der Antriebswelle (2) des Förderorganes enthält.

FIG.1

FIG.2

FIG.3

FIG.4

Europäisches Patentamt

**EUROPÄISCHER RECHERCHENBERICHT**

Nummer der Anmeldung

EP    90 10 6033

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | PATENT ABSTRACTS OF JAPAN<br>vol. 12, no. 152 (M-695)(2999) 11 Mai 1988,<br>& JP-A-62 271652 (OSAKA KIKO CO.) 25 November 1987,<br>* das ganze Dokument * | 1 | B65G43/02<br>B23Q11/00 |
| Y | DE-B-2900097 (JERVIS B. WEBB INTERNATIONAL CO.)<br>* Spalte 3, Zeile 60 - Spalte 4, Zeile 34;<br>Figuren 1-3 * | 1 | |
| A | * Figuren 1, 2 * | 2, 4 | |
| A | EP-A-0194960 (BELLHEIMER METALLWERK)<br>* Figuren 1, 5 * | 1, 2 | |

RECHERCHIERTE SACHGEBIETE (Int. Cl.5 )

B65G
B23Q

Der vorliegende Recherchenbericht wurde für alle Patentansprüche erstellt

| Recherchenort | Abschlußdatum der Recherche | Prüfer |
|---|---|---|
| BERLIN | 19 JULI 1990 | SIMON, J |